# EUROPEAN PATENT SPECIFICATION

(11) **EP 3 179 414 B1**
(45) Date of publication and mention of the grant of the patent: **04.08.2021**
(21) Application number: 15829965.1
(22) Date of filing: 10.06.2015
(51) Int. Cl.: G06K 19/077

(54) **RADIO FREQUENCY ELECTRONIC TAG FOR RUBBER TYRE, AND INSTALLATION METHOD FOR RADIO FREQUENCY ELECTRONIC TAG**
RFID-ETIKETT FÜR GUMMIREIFEN UND INSTALLATIONSVERFAHREN FÜR RFID- ETIKETT
ÉTIQUETTE ÉLECTRONIQUE RADIOFRÉQUENCE POUR TYPE DE CAOUTCHOUC ET SON PROCÉDÉ D'INSTALLATION

(30) Priority: 04.08.2014 CN 201410378865
(43) Date of publication of application: 14.06.2017
(73) Proprietor: MESNAC CO., LTD., Shibei District Qingdao Shandong 266042 (CN)
(72) Inventor: YAO, Yong, Shandong 266042 (CN); DONG, Lanfei, Shandong 266042 (CN); TENG, Xuezhi, Shandong 266042 (CN); TONG, Qiang, Shandong 266042 (CN); ZHANG, Donghui, Shandong 266042 (CN)
(74) Representative: KIPA AB
(86) International application number: PCT/CN2015/081120
(87) International publication number: WO 2016/019757

(56) References cited:
- CN-A- 103 886 357
- CN-U- 202 995 772
- FR-A1- 2 983 609
- US-A1- 2005 088 361
- US-A1- 2006 186 210
- US-A1- 2007 274 030
- US-A1- 2010 108 211
- US-A1- 2013 299 597
- None

## Description

### Field of The Technology

The present invention belongs to fields of rubber tire and electronic information technology, relates to a radio frequency electronic tag and installation method for frequency electronic tag, and more particularly to a radio frequency electronic tag for a rubber tire which is implanted in the rubber tire.

### Background of The Invention

A radio frequency electronic tag (RFID) is a non-contact automatic identification electronic tag, which comprises an exclusive identification code. When the radio frequency electronic tag is implanted in a carrier (such as a rubber tire) or on the surface of the carrier, it combined with the carrier into a whole. When a read-write unit actuates the radio frequency electronic tag, it would send/read/write data at any time. Therefore, the production, sale, use and claims state of the carrier can be monitored on real time. Now, the RFID (radio frequency electronic tag) is widely used in every industry.

At present, the radio frequency electronic tag mainly consists of a chip (integrated circuit), a base plate (the specific shape of the printed circuit board) and antennas. The chip is welded on the base plate by pins, and one end of the antenna is also welded on the base plate. During the molding stage of the tire, the RFID is implanted in the tire. Then, the RFID is combined with the tire into a whole after high temperature vulcanization. Said RFID along with the entire life of the tire is used for recording customizing messages so as to solve anti-fake, wrong goods and claims problems during sale and use of the tire.

US 2005/0088361 and 2013/0299597 disclose RFID devices where a frequency chip is arranged on a base-plate or printed circuit board and where the antennas are connected to the base-plate or printed circuit board.

Said radio frequency electronic tag implanted in the rubber tire has following problems:
1. As use of base plate structure, patch welding process would be used. The base plate is small, thus during production process, multi-chip stitching which uses a special fixture for fixing is adopted. After completion of welding, it also needs dividing plate, grinding and other technology. The production process is complex and needs much manual work, as a result, the quality is not uniform, and it is not conducive to mass production.
2. The base plate is thin and has sharp edge, the RFID and rubber can be combined well during the molding stage of the tire. However, when the tire in use, the tire deformation and deflection would cause friction in the rubber, therefore the rubber would be cut by the base plate, resulting in internal damage to the tire and security risks.
3. The electronic tag of this structure has different surface structures, therefore if the electronic tag is positioned in the rubber tire interlayer. It is easy to produce bubbles which are difficult to be discharged during molding, resulting in a decrease of the tire quality. Therefore, when the tire is automatically implanted in batches, it needs to distinguish the front and back sides of the RFID tags and implant status, which increases the difficulty of auto-implantation equipment design.
4. Since the RFID radio frequency tag transmits/receives data via connection between the antenna and the radio frequency module, the tire deflection and deformation caused by the tire manufacturing process or the conventional use are liable to cause the antenna and the electronic tag to be separated due to rupture, damage or aging, making the RFID tag invalid.
5. Said various radio frequency electronic tags have following disadvantages, the antennas cannot be replaced, or the tags would be easily damaged during replacing the antennas.

### Summary of The Invention

In order to solve above problems, the present invention provides a radio frequency electronic tag according to the claims.

By comparison with the prior art, the present invention has following advantages and positive effects:
1. The present invention replaces a chip antenna by welding process in tag production with a simple and reliable screw connection structures, and simplifies quality inspection. Via standardizing the connector specifications of the connection between the electronic tag chip and the antenna, it will be easy to change the different style antennas, thus the diversified design of the electronic tag can be realized. Therefore, electronic tags can quickly adapt to a variety of tires. The chip and the antennas are connected by screw connection structures. The lateral tension is difficult to make the antennas and the chip become separated, so they are connected firmly and reliable.
2. According to present invention, base plates have been eliminated, thus the process and quality problems caused by the chip and base-plate welding can be avoided. Therefore, the risk of rubber cutting by the sharp edge of the base plate can be avoided, which can effectively improve the production efficiency and the product quality.

### Brief Description of The Drawings

Figure 1 shows a front view of a radio frequency electronic tag for a rubber tire;
Figure 2 shows a perspective view without antennas;
Figure 3 shows a front view of a radio frequency electronic tag for a rubber tire according to embodiment 2 of the invention;
Figure 4 shows an assembly perspective view of a radio frequency electronic tag for a rubber tire according to embodiment 3 of the invention;
Figure 5 shows an assembly perspective view of a radio frequency electronic tag for a rubber tire according to embodiment 4 of the invention;

Numbers in drawings are: 1-antenna pins, 2-sleeve, 3-a radio frequency chip, 4-antennas, 5-external screw threads, 6-internal screw threads, 8- screws, 9-nuts.

### Detailed Embodiment of the Invention:

The present invention will now be described in detail with reference to the attached drawings:
According to an embodiment of the radio frequency electronic tag for a rubber tire comprises a radio frequency chip 3, antenna pins 1 on the radio frequency chip 3, and antennas 4 connected to the antenna pins 1. The radio frequency chip 3 is packaged in a sleeve 2 having a smooth surface, inner ends of the antenna pins 1 are connected to the radio frequency chip 3, external screw threads 5 or internal screw threads 6 are provided on outer ends of the antenna pins 1, and ends of the antennas are provided with screw connection structures matching the external screw threads 5 or internal screw threads 6 of the antenna pins 1.

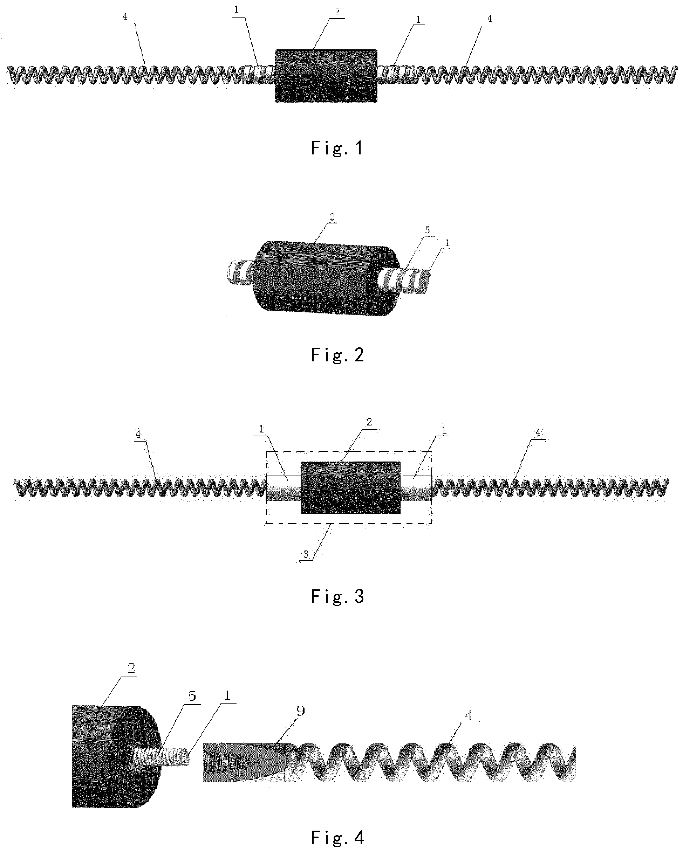

Referring to fig.1 and fig.2, according to embodiment 1 of the radio frequency electronic tag for a rubber tire comprises a radio frequency chip 3, antenna pins 1 on the radio frequency chip 3, and antennas 4 connected to the antenna pins 1. The radio frequency chip 3 is packaged in a sleeve 2 having a smooth surface. Two antenna pins 1 are provided on the ends of said radio frequency chip 3 respectively, the external ends of said two antenna pins 1 stretch out from the ends of the sleeve 2. External screw threads 5 are provided on the external ends of two antenna pins1. Two said antennas 4 are provided, screw connection structures on said antennas 4 which match the external screw threads 5 of the two antenna pins 1 are extensible coil springs, whose screw pitch is equal to the screw pith of matched external screw threads 5 on the external ends of the antenna pins 1. The thread depth of said external screw threads 5 on said antenna pins is slightly bigger than the diameter of the coil springs on one end of the antenna.

Referring to fig.3, according to embodiment 2 of the radio frequency electronic tag for a rubber tire comprises a radio frequency chip 3, antenna pins 1 on the radio frequency chip 3, and antennas 4 connected to the antenna pins 1. The radio frequency chip 3 is packaged in a sleeve 2 having a smooth surface. Two antenna pins 1 are provided on the ends of said radio frequency chip 3 respectively, the external ends of said two antenna pins 1 stretch out from the ends of the sleeve 2. Internal screw threads 6 are provided on the external ends of two antenna pins1. Two said antennas 4 are provided, screw connection structures on said antennas 4 which match the internal screw threads 6 of the two antenna pins 1 are extensible coil springs, whose screw pitch is equal to the screw pith of matched internal screw threads 5 on the external ends of the antenna pins 1. The thread depth of said internal screw threads 6 on said antenna pins is slightly bigger than the diameter of the coil springs on one end of the antenna.

Referring to fig.4, according to embodiment 3 of the radio frequency electronic tag for a rubber tire comprises a radio frequency chip 3, antenna pins 1 on the radio frequency chip 3, and antennas 4 connected to the antenna pins 1. The radio frequency chip 3 is packaged in a sleeve 2 having a smooth surface. Two antenna pins 1 are provided on the ends of said radio frequency chip 3 respectively, the external ends of said two antenna pins 1 stretch out from the ends of the sleeve 2. External screw threads are provided on the external ends of two antenna pins 1. Said antennas 4 are two extensible coil springs, screw connection structures on said antennas 4 which match the external screw threads 5 of the antenna pins 1 are nuts 9, and said nuts 9 are connected to the external screw threads 5 on one end of the antenna pins.

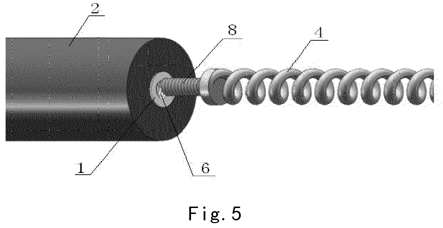

Referring to fig.5, according to embodiment 4 of the radio frequency electronic tag for a rubber tire comprises a radio frequency chip 3, two antenna pins 1 on the radio frequency chip 3, and two antennas 4 connected to the antenna pins 1. Two antenna pins 1 are provided on two ends of the radio frequency chip 3 respectively. The radio frequency chip 3 and two antenna pins are packaged in a sleeve 2 having a smooth surface. The external ends of said two antenna pins 1 are even with the ends of the sleeve 2. Internal screw threads 6 are provided on the external ends of two antenna pins 1. Screw connection structures on the end of said antennas 4 which match the internal screw threads 6 of the antenna pins 1 are screws 8, and said screws 9 are connected to the internal screw threads 5 on one end of the antenna pins.

In above embodiments, said sleeve 2 has a cylindrical shape with openings at both ends, a spheroid shape or other arbitrary shapes having obtuse corner angles, such as cube, etc.

During actual processing of the tag, the length of the antennas 4 can be adjusted by controlling the helix number of the antenna 4 to meet different needs. After the electronic tag is implanted into the tire, the tension introduced during using the tire is consistent with the direction of extension of the antenna 4. The above various kinds of screw connection structures can avoid problems such as high temperature welding, and the sub-RF chip 3 and the antenna 4 do not separate until they are relatively rotated. However, since the electronic tag is implanted in the tire, the entire tag is complete embedded in the rubber, they do not relatively rotate. So the tire deformation during use will not affect the combination of the electronic tag and the antennas 4, and tire heat will not affect the stability of the entire machine to ensure the reliability of the electronic tag.

Said screw or nut design on the antennas 4 also have advantages of easy assembly and easy to regulate.

It should be understood that the above embodiments are merely illustrative of the technical solutions of the present invention and should not be construed as limitations on the invention.

## Claims

1. A radio frequency electronic tag which comprises:
a radio frequency chip (3), the radio frequency chip (5) comprises antenna pins (1) arranged on the radio frequency chip (3);
antennas (4); and
a sleeve (2) in which the radio frequency chip (3) is packaged;
**characterized in that,**
the antennas (4) are connected to the antenna pins (1);
the antenna pins are formed as a rod, and one end of each of the antenna pins (1) is arranged inside the sleeve (2) and this end is connected to the radio frequency chip (3), external screw threads (5) or internal screw threads (6) are provided on an opposite end of the antenna pins (1), and
ends of the antennas (4) are provided with screw connection structures matching the external screw threads (5) or internal screw threads (6) of the antenna pins (1).

2. The radio frequency electronic tag according to claim 1, wherein two antenna pins (1) are provided on opposite sides of said radio frequency chip (3), and the opposite ends of said two antenna pins (1) are stretched out from ends of the sleeve (2); and
the screw connection structures on the ends of antennas (4) matching the external screw threads (5) or internal screw threads (6) of the antenna pins (1) are nuts (9), and said nuts (9) are connected to the external screw threads (5) on the ends of the antenna pins (1).

3. The radio frequency electronic tag according to claim 1, wherein two antenna pins (1) are provided on opposite sides of said radio frequency chip (3), and the opposite ends of said two antenna pins (1) are even with the ends of the sleeve (2); and
the screw connection structures on the ends of antennas (4) matching the external screw threads (5) or internal screw threads (6) of the antenna pins (1) are screws (8), and said screws (8) are connected to the internal screw threads (6) on the ends of the antenna pins (1).

4. The radio frequency electronic tag according to any of claims 1-3, wherein said sleeve (2) has a cylindrical shape with openings at both ends.

5. An installation method for a radio frequency electronic tag, the installation method comprising:
providing a radio frequency chip (3) being packaged in a sleeve, and antennas (4), wherein the radio frequency chip comprises antenna pins (1) arranged on the radio frequency chip (3);
**characterized by**:
connecting the antennas (4) to the antenna pins (1) by forming the antenna pins (1) as a rod, and arranging one end of each of the antenna pins (1) inside the sleeve (2) and connecting this end to the radio frequency chip (3),
wherein external screw threads (5) or internal screw threads (6) are provided on an opposite end of the antenna pins (1), and ends of the antennas (4) are provided with screw connection structures matching the external screw threads (5) or internal screw threads (6) of the antenna pins (1).

6. The installation method according to claim 5, wherein said antennas (4) are set as extensible coil springs matching with the thread (5, 6) on the antenna pins (1).

7. The installation method according to claim 6, wherein nuts (9) on the ends of said antennas (4) are matched with the external screw threads (5) on said antenna pins (1).

8. The installation method according to claim 6, wherein screws (8) on the ends of said antennas (4) are matched with the internal screw threads (6) on said antenna pins (1).

## Patentansprüche

1. Eine elektronische Radiofrequenz-Markierung mit:
einem Funkchip (3), wobei der Funkchip (5) Antennenkontakte (1) aufweist, die auf dem Funkchip (3) angeordnet sind,
Antennen (4) und
einer Hülle (2), in der der Funkchip (3) untergebracht ist,
**dadurch gekennzeichnet, dass**
die Antennen (4) mit den Antennenkontakten (1) verbunden sind,
die Antennenkontakte stangenförmig ausgebildet sind und ein Ende jedes Antennenkontakts (1) innerhalb der Hülle (2) angeordnet ist, wobei dieses Ende mit dem Funkchip (3) verbunden ist und Außen- (5) oder Innenschraubgewinde (6) an einem gegenüberliegenden Ende der Antennenkontakte (1) vorgesehen sind und
an den Enden der Antennen (4) Verschraubungen vorgesehen sind, die den Außen- (5) oder Innenschraubgewinden (6) der Antennenkontakte (1) entsprechen.

2. Die elektronische Radiofrequenz-Markierung gemäß Anspruch 1, wobei zwei Antennenkontakte (1) an entgegengesetzten Seiten des besagten Funkchips (3) vorgesehen sind und die entgegengesetzten Enden der besagten zwei Antennenkontakte (1) aus den Enden der Hülle (2) hervorragen und
es sich bei den den Außen- (5) oder Innenschraubgewinden (6) der Antennenkontakte (1) entsprechenden Verschraubungen an den Enden der Antennen (4) um Muttern (9) handelt,
wobei besagte Muttern (9) mit den Außenschraubgewinden (5) an den Enden der Antennenkontakte (1) verbunden sind.

3. Die elektronische Radiofrequenz-Markierung gemäß Anspruch 1, wobei zwei Antennenkontakte (1) an entgegengesetzten Seiten des besagten Funkchips (3) vorgesehen sind und die entgegengesetzten Enden der besagten zwei Antennenkontakte (1) mit den Enden der Hülle (2) abschließen und
es sich bei den den Außen- (5) oder Innenschraubgewinden (6) der Antennenkontakte (1) entsprechenden Verschraubungen an den Enden der Antennen (4) um Schrauben (8) handelt, wobei besagte Schrauben (8) mit den Innenschraubgewinden (6) an den Enden der Antennenkontakte (1) verbunden sind.

4. Die elektronische Radiofrequenz-Markierung gemäß einem der Ansprüche 1-3, wobei besagte Hülle (2) eine zylindrische Form mit Öffnungen an beiden Enden aufweist.

5. Eine Montageart für eine elektronische Radiofrequenz-Markierung, wobei die Montageart Folgendes umfasst:
die Bereitstellung eines in einer Hülle untergebrachten Funkchips (3) und von Antennen (4), wobei der Funkchip Antennenkontakte (1) aufweist, die auf dem Funkchip (3) angeordnet sind,
**dadurch gekennzeichnet, dass**
die Antennen (4) mit den Antennenkontakten (1) verbunden sind, indem die Antennenkontakte (1) stangenförmig ausgebildet sind und ein Ende jedes Antennenkontakts (1) in der Hülle (2) angeordnet ist und dieses Ende mit dem Funkchip (3) in Verbindung steht,
wobei Außen- (5) oder Innenschraubgewinden (6) an einem gegenüberliegenden Ende der Antennenkontakte (1) und an den Enden der Antennen (4) Verschraubungen vorgesehen sind, die den Außen- (5) oder Innenschraubgewinden (6) der Antennenkontakte (1) entsprechen.

6. Die Montageart gemäß Anspruch 5, wobei die besagten Antennen (4) als dehnbare Spiralfedern ausgebildet sind, die mit dem Gewinde (5, 6) der Antennenkontakte (1) übereinstimmen.

7. Die Montageart gemäß Anspruch 6, wobei Muttern (9) an den Enden der besagten Antennen (4) den Außenschraubgewinden (5) der besagten Antennenkontakte (1) entsprechen.

8. Die Montageart gemäß Anspruch 6, wobei Schrauben (8) an den Enden der besagten Antennen (4) den Innenschraubgewinden (6) der besagten Antennenkontakte (1) entsprechen.

## Revendications

1. Etiquette électronique radiofréquence, laquelle comprend :
une puce radiofréquence (3), la puce radiofréquence (5) comprend des broches d'antenne (1) agencées sur la puce radiofréquence (3) ;
des antennes (4) ; et
un manchon (2) dans lequel la puce radiofréquence (3) est logée ;
**caractérisée en ce que**
les antennes (4) sont connectées aux broches d'antenne (1) ;
les broches d'antenne sont formées sous la forme d'une tige, et une extrémité de chacune des broches d'antenne (1) est agencée à l'intérieur du manchon (2) et cette extrémité est connectée à la puce radiofréquence (3),
des filetages externes (5) ou des taraudages (6) sont prévus sur une extrémité opposée des broches d'antenne (1), et
des extrémités des antennes (4) sont dotées de structures de liaison par vissage correspondant aux filetages externes (5) ou aux taraudages (6) des broches d'antenne (1).

2. Etiquette électronique radiofréquence selon la revendication 1, dans laquelle deux broches d'antenne (1) sont prévues sur des côtés opposés de ladite puce radiofréquence (3), et les extrémités opposées desdites deux broches d'antenne (1) s'étendent au-delà des extrémités du manchon (2) ; et
les structures de liaison par vissage sur les extrémités des antennes (4) correspondant aux filetages externes (5) ou aux taraudages (6) des broches d'antenne (1) sont des écrous (9), et lesdits écrous (9) sont reliés aux filetages externes (5) sur les extrémités des broches d'antenne (1).

3. Etiquette électronique radiofréquence selon la revendication 1, dans laquelle deux broches d'antenne (1) sont prévues sur des côtés opposés de ladite puce radiofréquence (3), et les extrémités opposées desdites deux broches d'antenne (1) sont à fleur des extrémités du manchon (2) ; et
les structures de liaison par vissage sur les extrémités des antennes (4) correspondant aux filetages externes (5) ou aux taraudages (6) des broches d'antenne (1) sont des vis (8), et lesdites vis (8) sont reliées aux taraudages (6) sur les extrémités des broches d'antenne (1).

4. Etiquette électronique radiofréquence selon l'une quelconque des revendications 1 à 3, dans laquelle ledit manchon (2) présente une forme cylindrique avec des ouvertures aux deux extrémités.

5. Procédé d'installation d'une étiquette électronique radiofréquence, le procédé d'installation comprenant les étapes consistant à :
fournir une puce radiofréquence (3) qui est logée dans un manchon, et des antennes (4), où la puce radiofréquence (3) comprend des broches d'antenne (1) agencées sur la puce radiofréquence (3) ;
**caractérisé par** :
le fait de relier les antennes (4) aux broches d'antenne (1) en formant les broches d'antenne (1) sous la forme d'une tige, et en agençant une extrémité de chacune des broches d'antenne (1) à l'intérieur du manchon (2) et en connectant cette extrémité à la puce radiofréquence (3),
où des filetages externes (5) ou des taraudages (6) sont prévus sur une extrémité opposée des broches d'antenne (1), et des extrémités des antennes (4) sont dotées de structures de liaison par vissage correspondant aux filetages externes (5) ou aux taraudages (6) des broches d'antenne (1).

6. Procédé d'installation selon la revendication 5, où lesdites antennes (4) sont conçues sous la forme de ressorts hélicoïdaux extensibles correspondant aux filetages (5, 6) sur les broches d'antenne (1).

7. Procédé d'installation selon la revendication 6, où des écrous (9) sur les extrémités desdites antennes (4) sont appariés avec les filetages externes (5) sur lesdites broches d'antenne (1).

8. Procédé d'installation selon la revendication 6, où des vis (8) sur les extrémités desdites antennes (4) sont appariées avec les taraudages (6) sur lesdites broches d'antenne (1).
